# EUROPEAN PATENT APPLICATION

(11) **EP 4 783 347 A1**
(43) Date of publication of application: **29.07.2026**
(21) Application number: 24895868.8
(22) Date of filing: 05.09.2024
(51) Int. Cl.: H01M 50/559, H01M 10/658, H01M 50/209, H01M 50/477, H01M 50/367, H01M 10/04, H01M 10/0525

(54) **BATTERY CELL, BATTERY, AND ELECTRICAL DEVICE**

(30) Priority: 27.11.2023 CN 202323226526 U
(71) Applicant: Contemporary Amperex Technology Co., Limited, Ningde, Fujian 352100 (CN)
(72) Inventor: BAI, Jingfeng, Ningde, Fujian 352100 (CN); SHEN, Dan, Ningde, Fujian 352100 (CN); LI, Yao, Ningde, Fujian 352100 (CN)
(74) Representative: Kraus & Lederer PartGmbB
(86) International application number: PCT/CN2024/117237
(87) International publication number: WO 2025/112769

(57) **Abstract**

A battery cell (20), a battery (100), and an electric device are provided. The battery cell (20) includes a housing (21), an electrode assembly (22), a pressure relief mechanism (23), and an insulating piece (24). The housing (21) includes a first wall (211) and a second wall (212) connected to the first wall (211). The electrode assembly (22) is disposed in the housing (21). The second wall (212) surrounds the electrode assembly (22). A first gap (25) is formed between the electrode assembly (22) and the second wall (212). The pressure relief mechanism (23) is disposed on the first wall (211). The insulating piece (24) is disposed between the first wall (211) and the electrode assembly (22). The insulating piece (24) is configured to form an airflow channel (26) in communication with the first gap (25). The airflow channel (26) extends to the pressure relief mechanism (23).

## Description

### CROSS-REFERENCE TO RELATED APPLICATIONS

This application claims priority to and the benefit of the patent application No. 202323226526.5 filed with the China National Intellectual Property Administration on November 27, 2023, which is incorporated herein by reference in its entirety.

### TECHNICAL FIELD

This application relates to the field of battery technology, and in particular, to a battery cell, a battery, and an electric device.

### BACKGROUND

Energy saving and emission reduction are key to the sustainable development of the automotive industry. In this context, electric vehicles have become an important part of the sustainable development of the automotive industry due to their advantages in energy saving and environmental protection. For electric vehicles, battery technology is crucial for their development. In the development of traction battery technology, in addition to improving the performance of battery cells, safety also needs to be considered. Therefore, how to improve the safety of battery cells is an urgent problem to be solved in battery technology.

### SUMMARY

In view of the above problems, this application provides a battery cell, a battery, and an electric device, which can improve safety of battery cell.

According to a first aspect, this application provides a battery cell. The battery cell includes a housing, an electrode assembly, a pressure relief mechanism, and an insulating piece. The housing includes a first wall and a second wall connected to the first wall. The electrode assembly is disposed in the housing, where the second wall surrounds the electrode assembly, and a first gap is formed between the electrode assembly and the second wall. The pressure relief mechanism is disposed on the first wall. The insulating piece is disposed between the first wall and the electrode assembly, where the insulating piece is configured to form an airflow channel communicating with the first gap, and the airflow channel extends to the pressure relief mechanism.

In the battery cell in the embodiments of this application, the airflow channel formed by the insulating piece communicates with the first gap and the pressure relief mechanism, reducing the blockage of gas flow by the insulating piece and facilitating gas flow. When the battery cell undergoes thermal failure and the pressure relief mechanism is actuated, gas can flow quickly from the gas-generating region toward the pressure relief mechanism to be discharged from the pressure relief mechanism, reducing the risk of sealing failure between the first wall and the second wall and improving the safety of the battery cell.

In some embodiments, the airflow channel faces the first gap in a thickness direction of the first wall.

In this way, a path of gas flow from the first gap to the first wall is shortened, facilitating the rapid arrival of gas at the pressure relief mechanism and improving the smoothness of gas flow.

In some embodiments, the electrode assembly is wound into a wound structure and forms an arc-shaped surface, and the first gap is formed between the arc-shaped surface and the second wall.

In this way, provision of the arc-shaped surface can increase the cross-sectional area of the first gap, facilitating the rapid gas flow toward the pressure relief mechanism and improving the gas flow efficiency.

In some embodiments, the electrode assembly is provided in plurality. The plurality of electrode assemblies are arranged side by side. The first gap is jointly formed between two arc-shaped surfaces of adjacent electrode assemblies and the second wall.

In this way, a first gap is formed between each electrode assembly and the second wall, facilitating the rapid gas flow toward the pressure relief mechanism and improving the gas flow efficiency. In addition, the plurality of electrode assemblies can increase the energy density of the battery cell.

In some embodiments, the insulating piece includes a body and a first protrusion. The body includes a first surface and a second surface disposed opposite to each other along a thickness direction of the body. The first surface faces the electrode assembly. The first protrusion is disposed on the first surface and abuts against the electrode assembly. The airflow channel includes a through hole formed at the first protrusion.

In this way, the first protrusion abuts against the electrode assembly, which can reduce the shaking of the electrode assembly. In addition, the first protrusion increases the gap between the electrode assembly and the first surface, so that gas can flow to the pressure relief mechanism through the through hole, improving the gas flow efficiency.

In some embodiments, a height of the first protrusion is 0.1 mm to 4 mm.

In this way, when the height of the first protrusion is in the above range, a weight of the insulating piece can be reduced while the strength requirement for the first protrusion is satisfied, improving the safety and practicality of the battery cell.

In some embodiments, the first protrusion includes a bottom surface and a side surface. The bottom surface abuts against the electrode assembly. The side surface connects the first surface and the bottom surface. The through hole penetrates the side surface.

In this way, the through hole penetrates two opposite side surfaces of the first protrusion, facilitating the passage of gas through the first protrusion, reducing the blockage of gas flow by the first protrusion and improving the smoothness of gas flow.

In some embodiments, the through hole penetrates the bottom surface.

In this way, the through hole penetrates the bottom surface, and this increases the cross-sectional area of the through hole, facilitating the rapid gas flow toward the pressure relief mechanism and improving the gas flow efficiency; in addition, formation of the through hole is easier.

In some embodiments, the through hole penetrates the side surface along a length direction of the body. A dimension of the through hole along a width direction of the body is D, a width of the body is W, and 0.1 < D/W < 0.9.

In this way, when D/W is in the above range, formation of the through hole is easier. In addition, a larger ratio of the dimension of the through hole along the width direction of the body to the width dimension of the body indicates a larger dimension of the through hole relative to the body, facilitating the rapid gas flow toward the pressure relief mechanism and improving the gas flow efficiency.

In some embodiments, the airflow channel includes a perforation formed at the body. The perforation penetrates the first surface and the second surface. The perforation is opposite to the pressure relief mechanism along the thickness direction of the body. The perforation communicates with the through hole.

In this way, gas can flow from the first gap to the pressure relief mechanism through the perforation, increasing gas flow paths and improving the gas flow efficiency.

In some embodiments, the airflow channel includes a mounting hole formed at the body. The mounting hole penetrates the first surface and the second surface. The first protrusion is disposed at an edge of the mounting hole. The mounting hole is configured to lead out electrical energy of the battery cell.

In this way, the electrode assembly can charge and discharge the battery cell through the mounting hole, and in addition, gas can also flow to the pressure relief mechanism through the mounting hole, increasing gas flow paths and improving the gas flow efficiency.

In some embodiments, a second gap is formed between the second surface and the first wall, and the airflow channel includes the second gap.

In this way, the dimension of the second gap is relatively large, and gas can flow to the pressure relief mechanism through the second gap, facilitating the rapid gas flow toward the pressure relief mechanism and improving the gas flow efficiency.

In some embodiments, the insulating piece includes a plurality of second protrusions disposed on a side surface of the body. The plurality of second protrusions are spaced apart along a circumferential direction of the body. The second protrusion protrudes from the second surface and abuts against the first wall to form the second gap between the second surface and the first wall. A notch is formed between two adjacent second protrusions along the circumferential direction of the body. The notch communicates with the first gap and the second gap.

In this way, the plurality of second protrusions can form a plurality of notches, and the plurality of notches form a plurality of gas flow positions on the insulating piece, facilitating the sequential gas flow from the first gap, the notches, and the second gap toward the pressure relief mechanism and improving the gas flow efficiency.

In some embodiments, the body is formed with a groove. The groove is recessed from the second surface toward the first surface. The groove is opposite to the pressure relief mechanism along the thickness direction of the body.

In this way, the groove can increase an area of the second gap, facilitating the rapid gas flow toward the pressure relief mechanism and improving the gas flow efficiency.

In some embodiments, the second protrusion abuts against the second wall.

In this way, the plurality of second protrusions abut against the second wall, and then more positions of the insulating piece contact the second wall, improving positioning of the insulating piece.

In some embodiments, an edge of the second surface forms an edge of the insulating piece.

In this way, the structure of the insulating piece is simple and the formation is easier.

In some embodiments, in a direction perpendicular to the thickness direction of the first wall, a dimension of the insulating piece is smaller than a dimension of an inner surface of the housing.

In this way, a gap can be formed between the edge of the insulating piece and the second wall, facilitating the gas flow from the first gap to the second gap through the edge of the insulating piece.

In some embodiments, the electrode assembly includes a main part and a tab connected to the main part. The battery cell includes an electrode terminal disposed on the first wall. The electrode terminal is connected to the tab. An insulating layer is provided between the electrode terminal and the main part.

In this way, through electrical connection between the electrode terminal and the tab, electrical energy of the battery cell can be output or input, to charge and discharge the battery cell.

In some embodiments, the first wall and the second wall enclose the housing of the battery cell and are integrally formed. The housing includes a third wall. The third wall is opposite to the first wall. The third wall is formed as a cover and connected to the second wall.

In this way, the housing enclosed by the first wall, the second wall, and the third wall forms a closed space for accommodating the electrode assembly, isolating the electrode assembly from an external environment and improving the safety of the battery cell.

In some embodiments, the wall thickness of the first wall is 0.5 mm to 3 mm.

In this way, when the wall thickness of the first wall is in the above range, a weight of the housing can be reduced while the strength requirement for the first wall can be satisfied, improving the safety and practicality of the battery cell.

According to a second aspect, this application provides a battery, including the battery cell in any of the above embodiments.

According to a third aspect, this application provides an electric device, including the battery cell or the battery in any of the above embodiments. The battery cell or the battery is configured to provide electrical energy.

The above description is only an overview of the technical solutions of this application. In order to more clearly understand the technical means of this application and to implement them in accordance with the contents of the specification, and to make the above and other objects, features, and advantages of this application more obvious and easier to understand, the specific embodiments of this application are specifically illustrated below.

### BRIEF DESCRIPTION OF DRAWINGS

By reading the following detailed description of the preferred embodiments, various other advantages and benefits will become clear to those of ordinary skill in the art. The accompanying drawings are only for the purpose of illustrating the preferred embodiments and are not considered as limitations to this application. Moreover, in all the drawings, the same reference signs denote the same components. In the drawings:
FIG. 1 is a schematic diagram of a structure of a vehicle in some embodiments of this application;
FIG. 2 is a schematic diagram of a structure of a battery in some embodiments of this application;
FIG. 3 is a schematic diagram of a structure of a battery cell in some embodiments of this application;
FIG. 4 is a schematic exploded view of a structure of a battery cell in some embodiments of this application;
FIG. 5 is a schematic diagram of a structure of a battery cell in some embodiments of this application;
FIG. 6 is a schematic diagram of a structure of a battery cell in some embodiments of this application;
FIG. 7 is a schematic diagram of a structure of an insulating piece in some embodiments of this application;
FIG. 8 is a schematic diagram of a structure of an insulating piece in some embodiments of this application;
FIG. 9 is a front view of a battery cell in some embodiments of this application;
FIG. 10 is a cross-sectional view along line A-A in FIG. 9;
FIG. 11 is a schematic diagram of a structure of an insulating piece in some embodiments of this application;
FIG. 12 is a schematic diagram of a structure of an insulating piece in some embodiments of this application;
FIG. 13 is a schematic diagram of a structure of a battery cell in some embodiments of this application;
FIG. 14 is a side view of a battery cell in some embodiments of this application; and
FIG. 15 is a cross-sectional view along line B-B of FIG. 14.

Reference signs: 1000. vehicle; 100. battery; 200. controller; 300. motor; 10. box; 11. first portion; 12. second portion; 20. battery cell; 21. housing; 211. first wall; 212. second wall; 213. electrode terminal; 214. third wall; 22. electrode assembly; 221. arc-shaped surface; 222. main part; 223. tab; 23. pressure relief mechanism; 24. insulating piece; 241. body; 242. first protrusion; 243. first surface; 244. second surface; 245. bottom surface; 246. side surface; 247. second protrusion; 248. groove; 249. notch; 25. first gap; 26. airflow channel; 261. through hole; 262. perforation; 263. mounting hole; 264. second gap; and 27. insulating layer.

### DESCRIPTION OF EMBODIMENTS

The embodiments of the technical solutions of this application are described in detail below with reference to the accompanying drawings. The following embodiments are only used to illustrate the technical solutions of this application more clearly, and thus are only used as examples and cannot be used to limit the protection scope of this application.

Unless otherwise defined, all technical and scientific terms used herein have the same meaning as commonly understood by those of ordinary skill in the art to which this application pertains; the terms used herein are only for the purpose of describing specific embodiments and are not intended to limit this application; the terms "include" and "have" and any variations thereof in the specification and claims of this application and the above description of the drawings are intended to cover non-exclusive inclusions.

In the description of the embodiments of this application, the technical terms "first", "second", and the like are only used to distinguish different objects and should not be understood as indication or implication of relative importance or implicit indication of the number, specific order or primary and secondary relationship of the indicated technical features. In the description of the embodiments of this application, the term "plurality" means two or more, unless otherwise specifically defined.

As used herein, "an embodiment" means that a particular feature, structure, or characteristic described with reference to the embodiment can be included in at least one embodiment of this application. The phrase appearing in various places in the specification does not necessarily refer to the same embodiment, nor is it an independent or alternative embodiment that is mutually exclusive with other embodiments. Those of ordinary skill in the art explicitly and implicitly understand that the embodiments described herein can be combined with other embodiments.

In the description of the embodiments of this application, the term "and/or" is merely an association describing associated objects, indicating that three relationships may exist, for example, A and/or B may indicate: A exists alone, both A and B exist, and B exists alone. In addition, the character "/" herein generally indicates that the preceding and following associated objects are in an "or" relationship.

In the description of the embodiments of this application, the term "plurality" refers to two or more (including two), similarly, "a plurality of groups" refers to two or more groups (including two groups), and "a plurality of sheets" refers to two or more sheets (including two sheets).

In the description of the embodiments of this application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like is based on the orientation or positional relationship shown in the drawings, and is only for the convenience of describing the embodiments of this application and simplifying the description, rather than indicating or implying that the referred device or element must have a specific orientation, be constructed and operated in a specific orientation, and therefore should not be understood as limitations to the embodiments of this application.

In the description of the embodiments of this application, unless otherwise expressly specified and limited, the technical terms "mounting", "connection", "join", "fixation", and the like should be understood in a broad sense, for example, it may be a fixed connection, a detachable connection, or integration; it may alternatively be a mechanical connection or an electrical connection; it may be direct connection or indirect connection through an intermediary, or it may be internal communication of two elements or interaction relationship between two elements. For those of ordinary skill in the art, the specific meanings of the above terms in the embodiments of this application can be understood according to specific situations.

At present, from the development of the market situation, the application of traction batteries is becoming increasingly widespread. Traction batteries are not only applied to energy storage power systems such as hydropower, thermal power, wind power, and solar power stations, but also widely applied to electric bicycles, electric motorcycles, electric vehicles and other electric vehicles, as well as military equipment, aerospace, and other fields. With the continuous expansion of the application fields of traction batteries, the market demand is also increasing.

In this application, the battery cell may include a lithium-ion secondary battery, a lithium-ion primary battery, a lithium-sulfur battery, a sodium-lithium ion battery, a sodium ion battery, a magnesium ion battery, or the like, and the embodiments of this application are not limited thereto. The battery cell may be in a shape of cylinder, flat cube, cuboid, or the like, and this is not limited in the embodiments of this application. Battery cells are generally classified into three types according to packaging methods: cylindrical battery cell, prismatic battery cell, and pouch battery cell, and this is not limited in the embodiments of this application.

The battery mentioned in the embodiments of this application refers to a single physical module that includes one or more battery cells to provide higher voltage and capacity. For example, the battery mentioned in this application may include a battery module, a battery pack, or the like. The battery generally includes a box for packaging one or more battery cells. The box can prevent liquid or other foreign objects from affecting the charge or discharge of the battery cells.

The battery cell includes an electrode assembly and an electrolyte, and the electrode assembly is formed by a positive electrode sheet, a negative electrode sheet and a separator. The battery cell mainly operates based on metal ion movement between the positive electrode sheet and the negative electrode sheet. The positive electrode sheet includes a positive electrode current collector and a positive electrode active material layer, the positive electrode active material layer is coated to a surface of the positive electrode current collector, the current collector not coated with the positive electrode active material layer protrudes from the current collector coated with the positive electrode active material layer, and the current collector not coated with the positive electrode active material layer serves as a positive electrode tab. A lithium-ion battery is used as an example. A material of the positive electrode current collector may be aluminum, and the positive electrode active material may be lithium cobalt oxide, lithium iron phosphate, ternary lithium, lithium manganate, or the like. The negative electrode sheet includes a negative electrode current collector and a negative electrode active material layer, the negative electrode active material layer is coated to the surface of the negative electrode current collector, the current collector not coated with the negative electrode active material layer protrudes from the current collector coated with the negative electrode active material layer, and the current collector not coated with the negative electrode active material layer serves as a negative electrode tab. A material of the negative electrode current collector may be copper, and the negative electrode active material may be carbon, silicon, or the like. In order to ensure that no fusing occurs when a large current passes, a plurality of positive electrode tabs are stacked, and a plurality of negative electrode tabs are stacked. A material of the separator may be PP (polypropylene, polypropylene), PE (polyethylene, polyethylene), or the like.

The battery cell further includes a housing and an insulating piece. The housing includes a first wall and a second wall. The electrode assembly is disposed in the second wall. The insulating piece is disposed on a side of the first wall facing the interior of the battery cell. The insulating piece is configured to insulate and isolate the electrode assembly from the first wall.

The battery cell further includes a pressure relief mechanism. The pressure relief mechanism may be disposed on the first wall to relieve the internal pressure or temperature of the battery cell.

The pressure relief mechanism refers to an element or component that is actuated to relieve internal pressure or temperature when the internal pressure or temperature of the battery cell reaches a predetermined threshold. The pressure relief mechanism may be in forms such as an explosion-proof valve, a gas valve, a pressure relief valve, or a safety valve, and may specifically be a pressure-sensitive or temperature-sensitive element or structure. To be specific, when the internal pressure or temperature of the battery cell reaches a predetermined threshold, the pressure relief mechanism performs an action or a fragile structure provided in the pressure relief mechanism is broken, thereby forming an opening or channel for relieving the internal pressure or temperature.

The "actuation" in this application refers to an action or activation by the pressure relief mechanism to reach a certain state, relieving the internal pressure and temperature of the battery cell. The action by the pressure relief mechanism may include, but is not limited to: rupture, breakage, tearing, opening, or the like of at least part of the pressure relief mechanism. When the pressure relief mechanism is actuated, high-temperature and high-pressure substances inside the battery cell as exhaust are discharged from an actuated portion. In this way, pressure of the battery cell can be relieved in a controlled manner, thereby avoiding potential serious accidents.

The advancement of battery technology requires balancing various design considerations, including performance parameters such as energy density, discharge capacity, and charge/discharge rate. In addition, the safety of the battery needs to be considered.

In the prior art, the first wall of the battery cell is welded to the second wall, the insulating piece is disposed on a side of the first wall facing the interior of the battery cell, a protrusion is provided on a surface of the insulating piece facing the electrode assembly, and the protrusion is configured to abut against the electrode assembly to position the electrode assembly; since the pressure relief mechanism on the first wall is disposed in the middle of the first wall, and a middle protrusion is provided at a position of the insulating piece corresponding to the pressure relief mechanism, the middle protrusion abuts against the electrode assembly to reduce the shaking of the electrode assembly. Further, a through hole extending along a thickness direction of the insulating piece is provided on a surface of the middle protrusion facing the electrode assembly, but when the battery cell undergoes thermal runaway, the pressure relief mechanism (such as an explosion-proof valve) still has the problem of delayed pressure relief. Analysis shows that when thermal runaway occurs in a local region of the battery cell, gas generation in this region is significant, leading to a rapid pressure rise in this region. The through hole of the middle protrusion facing the electrode assembly is covered by the electrode assembly. Due to the blockage of the middle protrusion, the fluidity of gas on both sides of the middle protrusion is poor. Therefore, an amount of gas flow inside the battery cell toward the pressure relief mechanism is small. At the moment when the pressure relief mechanism relieves pressure, the gas generated in the region with significant gas generation cannot flow rapidly to the pressure relief mechanism for discharge, causing the gas in this region to impact the nearby second wall, causing a weld between the second wall and the first wall to crack, leading to the risk of fire and explosion.

In order to improve the safety of the battery cell, this application provides an insulating piece, applied to a battery cell. The insulating piece includes a body and a first protrusion. The body has a first surface and a second surface disposed opposite to each other in the thickness direction of the body. The first surface faces the electrode assembly of the battery cell, the second surface faces away from the electrode assembly, the first protrusion is formed on the first surface, and the first protrusion is configured to abut against the electrode assembly, where the first protrusion is provided with a through hole, and the through hole penetrates the first protrusion in a direction intersecting the thickness direction. The through hole facilitates the gas flow in a direction intersecting the thickness direction, and penetrates the first protrusion to reduce the blockage of gas flow by the first protrusion, improving the smoothness of gas flow, facilitating the gas flow toward the pressure relief mechanism disposed on the first wall.

In the battery cell constituted by such an insulating piece, since the through hole penetrates the first protrusion in a direction intersecting the thickness direction, in other words, the extending direction of the through hole intersects the thickness direction of the body of the insulating piece, and the through hole penetrates the first protrusion, gas can quickly pass through the first protrusion when flowing through the first protrusion. This reduces the blockage of gas flow by the first protrusion and facilitates the gas flow. When the battery cell undergoes thermal runaway and the pressure relief mechanism is actuated, gas can flow quickly from the gas-generating region toward the pressure relief mechanism to be discharged from the pressure relief mechanism, reducing the risk of cracking failure of the weld between the first wall and the second wall and improving the safety of the battery cell.

The battery cell disclosed in the embodiments of this application may be, but is not limited to, used in electric devices such as vehicles, ships or aircraft. A power system of the electric device may be formed by the battery cell, battery, and the like disclosed in this application.

An embodiment of this application provides an electric device using a battery cell as a power source. The electric device may be, but is not limited to, a mobile phone, a tablet, a notebook computer, an electric toy, an electric tool, an electric bicycle, an electric vehicle, a ship, a spacecraft, or the like. The electric toy may include fixed or mobile electric toys, such as a game console, an electric vehicle toy, an electric ship toy, an electric aircraft toy, or the like, and the spacecraft may include an airplane, a rocket, a space shuttle, a spaceship, or the like.

The following embodiments are described by taking a vehicle 1000 as an example of an electric device in an embodiment of this application for convenience of explanation.

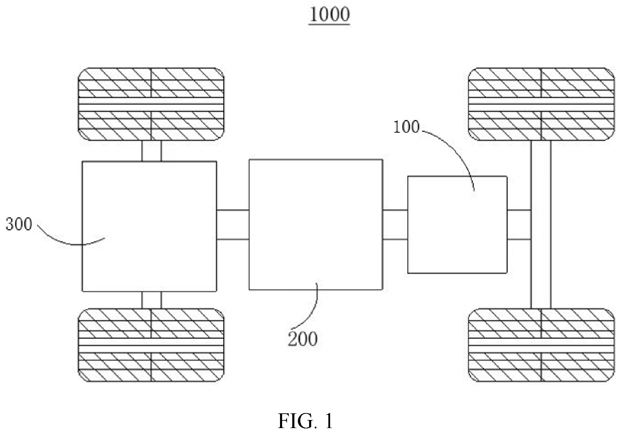

Refer to FIG. 1. FIG. 1 is a schematic diagram of a structure of a vehicle 1000 provided in some embodiments of this application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is provided inside the vehicle 1000, and the battery 100 may be disposed at the bottom, head or tail of the vehicle 1000. The battery 100 may be used for power source of the vehicle 1000, for example, the battery 100 may serve as an operating power source of the vehicle 1000. The vehicle 1000 may further include a controller 200 and a motor 300, and the controller 200 is used to control the battery 100 to supply power to the motor 300, for example, satisfying the power needs of start, navigation and running of the vehicle 1000.

In some embodiments of this application, the battery 100 may not only serve as an operating power source of the vehicle 1000, but also as a driving power source of the vehicle 1000, completely or partially replacing fuel or natural gas to provide driving power for the vehicle 1000.

In some embodiments, the battery 100 may be an energy storage apparatus. The energy storage apparatus includes an energy storage container, an energy storage cabinet, or the like.

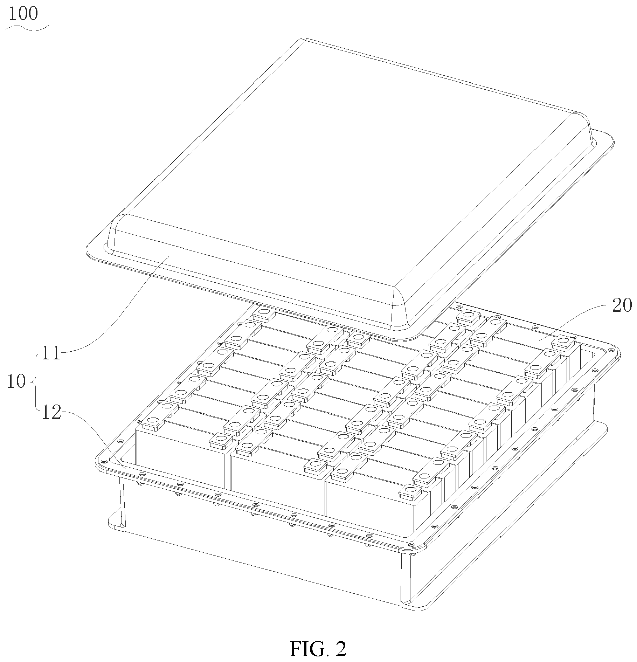

Refer to FIG. 2. FIG. 2 is a schematic exploded view of a structure of a battery 100 provided in some embodiments of this application. The battery 100 includes a box 10 and a battery cell 20. The battery cell 20 is accommodated in the box 10. The box 10 is configured to provide an accommodation space for the battery cell 20, and the box 10 may be of various structures.

In some embodiments, the box 10 may include a first portion 11 and a second portion 12. The first portion 11 and the second portion 12 fit each other. The first portion 11 and the second portion 12 jointly define an accommodation space for accommodating the battery cell 20. The second portion 12 may be a hollow structure with one end open, the first portion 11 may be a plate-shaped structure, and the first portion 11 fits the open side of the second portion 12 so that the first portion 11 and the second portion 12 jointly define the accommodation space. The first portion 11 and the second portion 12 may alternatively both be hollow structures with one side open, and the open side of the first portion 11 fits the open side of the second portion 12. Certainly, the box 10 formed by the first portion 11 and the second portion 12 may be in various shapes, such as cylinder or cuboid.

In the battery 100, the battery cell 20 may be provided in plurality, and the plurality of battery cells 20 may be connected in series, parallel, or series-parallel. The series-parallel connection refers to both series and parallel connections in the plurality of battery cells 20. The plurality of battery cells 20 may be directly connected in series, parallel, or series-parallel, and then the entirety formed by the plurality of battery cells 20 is accommodated in the box 10. Certainly, the battery 100 may alternatively be an entirety formed by a plurality of battery modules connected in series, parallel, or series-parallel, where the battery modules are formed by connecting the plurality of battery cells 20 in series, parallel or series-parallel; and accommodated in the box 10. The battery 100 may further include other structures, for example, the battery 100 may further include a busbar component for achieving electrical connection between the plurality of battery cells 20.

Each battery cell 20 may be a secondary battery or a primary battery; or may be a lithium-sulfur battery, a sodium-ion battery, or a magnesium-ion battery; but the battery cell is not limited thereto. The battery cell 20 may be in a shape of cylinder, flat cube, cuboid, or the like.

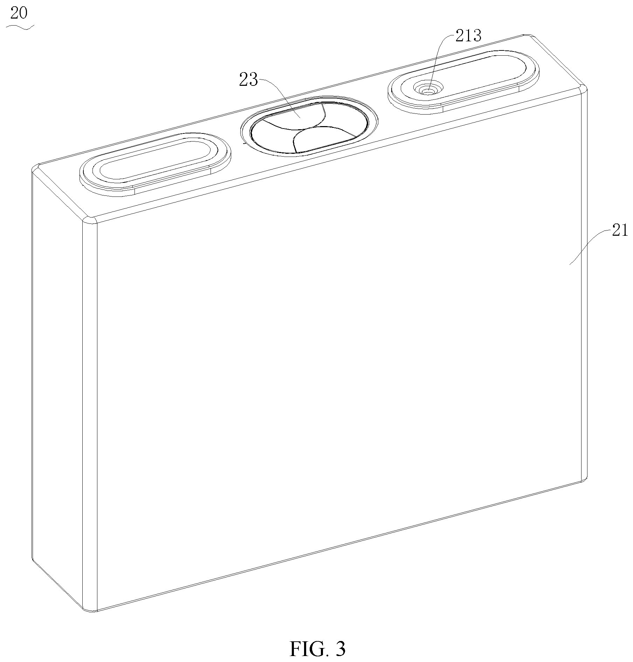

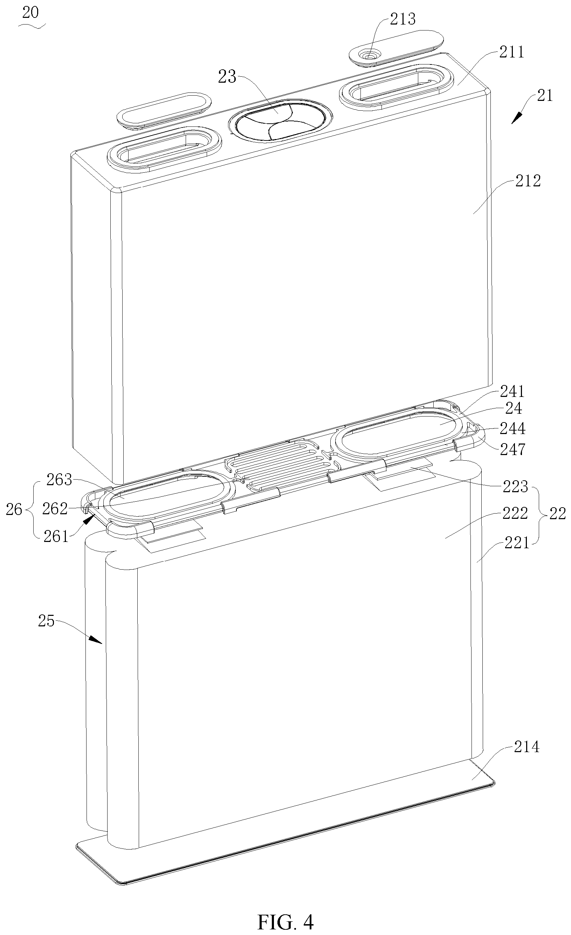

According to some embodiments of this application, with reference to FIG. 3 and FIG. 4, FIG. 3 is a schematic diagram of a structure of a battery cell 20 in some embodiments of this application; and FIG. 4 is a schematic exploded view of a structure of a battery cell 20 in some embodiments of this application. The battery cell 20 in the embodiments of this application includes a housing 21, an electrode assembly 22, a pressure relief mechanism 23, and an insulating piece 24. The housing 21 includes a first wall 211 and a second wall 212 connected to the first wall 211. The electrode assembly 22 is disposed in the housing 21. The second wall 212 surrounds the electrode assembly 22. A first gap 25 is formed between the electrode assembly 22 and the second wall 212, the pressure relief mechanism 23 is disposed on the first wall 211, the insulating piece 24 is disposed between the first wall 211 and the electrode assembly 22, the insulating piece 24 is configured to form an airflow channel 26 communicating with the first gap 25, and the airflow channel 26 extends to the pressure relief mechanism 23.

Specifically, the housing 21 is a hollow structure, and an accommodation cavity for accommodating the electrode assembly 22 and the electrolyte is formed inside the housing 21. The housing 21 may be in various shapes, such as cylinder or cuboid. The shape of the housing 21 may be determined according to the specific shape of the electrode assembly 22. For example, if the electrode assembly 22 is a cylindrical structure, a cylindrical housing 21 may be used; if the electrode assembly 22 is a cuboid structure, a cuboid housing 21 may be used.

The first wall 211 and the second wall 212 are disposed perpendicularly and sealingly connected to form a sealed space for accommodating the electrode assembly 22 and the electrolyte. The first wall 211 and the second wall 212 may be integrally formed or connected by welding. A shape of the first wall 211 may be adapted to a shape of the second wall 212 to cooperate with the second wall 212, and the first wall 211 may be a circular or square planar structure. Optionally, the first wall 211 may be made of a material with a certain hardness and strength, such as an aluminum alloy, so that the first wall 211 is not easily deformed when squeezed or impacted, enabling the battery cell 20 to have higher structural strength and better safety performance. The second wall 212 may be in various shapes and dimensions, such as a cuboid shape, a cylindrical shape, or a hexagonal prism shape. Specifically, the shape of the second wall 212 may be determined according to the specific shape and dimension of the electrode assembly 22. The second wall 212 may be made of various materials, such as copper, iron, aluminum, stainless steel, or aluminum alloy, and the material of the first wall 211 may be the same as or different from the material of the second wall 212.

The electrode assembly 22 is a core component of the battery cell 20 for achieving charge and discharge functions. The electrode assembly 22 includes a positive electrode sheet, a negative electrode sheet, and a separator, where the positive electrode sheet and the negative electrode sheet have opposite polarities, the separator is configured to insulate and isolate the positive electrode sheet from the negative electrode sheet. The electrode assembly 22 mainly operates based on metal ion movement between the positive electrode sheet and the negative electrode sheet.

The pressure relief mechanism 23 is configured to release internal pressure when the internal pressure or temperature of the battery cell 20 reaches a threshold. When the electrode assembly 22 undergoes thermal runaway, high-temperature gas generated by the thermal runaway inside the second wall 212 can reach the pressure relief mechanism 23, and the pressure relief mechanism 23 is pushed open under the action of impact force, so that the high-temperature gas can be promptly relieved, improving the safety of the battery cell 20. It should be noted that the pressure relief mechanism 23 may be disposed on the first wall 211 or on the second wall 212.

The insulating piece 24 is disposed on a side of the first wall 211 facing the interior of the battery cell 20, and the insulating piece 24 may be configured to isolate an electrical connection component in the second wall 212 from the first wall 211 to reduce the risk of short circuit. For example, the insulating piece 24 may be plastic, rubber, or the like.

The first gap 25 is a gap between the electrode assembly 22 and the second wall 212, an airflow channel 26 is a channel for gas flow, the airflow channel 26 communicates with the first gap 25 and the pressure relief mechanism 23, and gas may flow from the first gap 25 to the pressure relief mechanism 23 through the airflow channel 26.

In the battery cell 20 in the embodiments of this application, the airflow channel 26 formed by the insulating piece 24 communicates with the first gap 25 and the pressure relief mechanism 23, reducing the blockage of gas flow by the insulating piece 24 and facilitating gas flow. When the battery cell 20 undergoes thermal failure and the pressure relief mechanism 23 is actuated, gas can flow quickly from the gas-generating region toward the pressure relief mechanism 23 to be discharged from the pressure relief mechanism 23, reducing the risk of sealing failure between the first wall 211 and the second wall 212 and improving the safety of the battery cell 20.

Refer to FIG. 4. In some embodiments, the airflow channel 26 faces the first gap 25 in the thickness direction of the first wall 211.

Specifically, the first gap 25 extends toward the insulating piece 24 in the thickness direction of the first wall 211, and the airflow channel 26 extends from the insulating piece 24 toward the pressure relief mechanism 23 in the thickness direction of the first wall 211.

In this way, a path of gas flow from the first gap 25 to the first wall 211 is shortened, facilitating the rapid arrival of gas at the pressure relief mechanism 23 and improving the smoothness of gas flow.

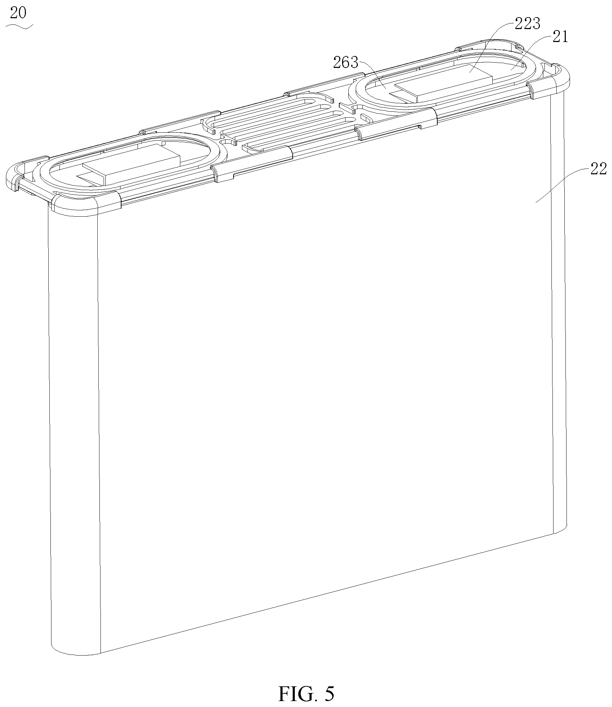

Refer to FIG. 4 and FIG. 5. FIG. 5 is a schematic diagram of a structure of a battery cell 20 in some embodiments of this application. In some embodiments, the electrode assembly 22 is wound into a wound structure and forms an arc-shaped surface 221. The first gap 25 is formed between the arc-shaped surface 221 and the second wall 212.

Specifically, the arc-shaped surface 221 may contact the second wall 212, or there is a certain distance from the second wall 212; and a plane of the electrode assembly 22 tangent to the arc-shaped surface 221 may contact the second wall 212, or there is a certain distance from the second wall 212. A gap between the arc-shaped surface 221, or the plane, and the second wall 212 is the first gap 25.

In this way, provision of the arc-shaped surface 221 can increase the cross-sectional area of the first gap 25, facilitating the rapid gas flow toward the pressure relief mechanism 23 and improving the gas flow efficiency.

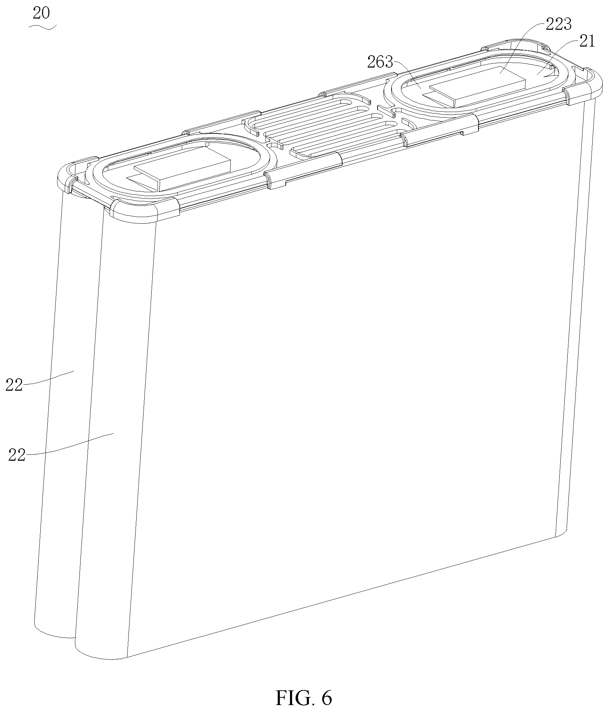

Refer to FIG. 4 and FIG. 6. FIG. 6 is a schematic diagram of a structure of a battery cell 20 in some embodiments of this application. In some embodiments, the electrode assembly 22 is provided in plurality, the plurality of electrode assemblies 22 are arranged side by side, the first gap 25 is jointly formed between two arc-shaped surfaces 221 of adjacent electrode assemblies 22 and the second wall 212.

Specifically, two, three, four, or more electrode assemblies 22 may be provided. The plurality of electrode assemblies 22 are stacked along the thickness direction of the electrode assembly 22, and gaps between the arc-shaped surfaces 221 on two sides of the electrode assembly 22 and the second wall 212 form the first gaps 25.

In this way, a first gap 25 is formed between each electrode assembly 22 and the second wall 212, facilitating the rapid gas flow toward the pressure relief mechanism 23 and improving the gas flow efficiency. In addition, the plurality of electrode assemblies 22 can increase the energy density of the battery cell 20.

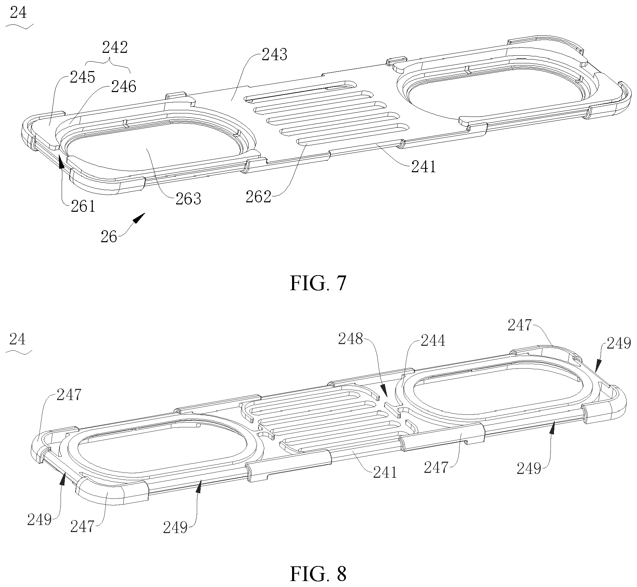

Refer to FIG. 7 and FIG. 8. FIG. 7 is a schematic diagram of a structure of an insulating piece 24 in some embodiments of this application. FIG. 8 is a schematic diagram of a structure of an insulating piece 24 in some embodiments of this application. In some embodiments, the insulating piece 24 includes a body 241 and a first protrusion 242. The body 241 includes a first surface 243 and a second surface 244 disposed opposite to each other in the thickness direction thereof. The first surface 243 faces the electrode assembly 22. The first protrusion 242 is disposed on the first surface 243 and abuts against the electrode assembly 22. The airflow channel 26 includes a through hole 261 formed at the first protrusion 242.

Specifically, the body 241 may be a rectangular plate-shaped structure. The first surface 243 faces the electrode assembly 22. The second surface 244 faces away from the electrode assembly 22. The first surface 243 and the second surface 244 are two surfaces of the body 241 disposed opposite to each other along a thickness direction of the body. The first protrusion 242 is a component formed on the first surface 243 and configured to cooperate with the electrode assembly 22, and the first protrusion 242 may be integrally formed with the body 241, for example, the first protrusion 242 and the body 241 are formed through hot-melting. Two first protrusions 242 may be provided, and the two first protrusions 242 are disposed at two ends of the body 241 along the length direction of the body 241. Four first protrusions 242 may be provided, and the four first protrusions 242 are respectively distributed at four corners of the body 241 along the length direction and width direction of the body 241. The through hole 261 may be a hole in a regular shape such as circle or square, or a hole in an irregular shape. The through hole 261 penetrates the first protrusion 242 and communicates with the first gap 25.

In this way, the first protrusion 242 abuts against the electrode assembly 22, which can reduce the shaking of the electrode assembly 22. In addition, the first protrusion 242 increases the gap between the electrode assembly 22 and the first surface 243, so that gas can flow to the pressure relief mechanism 23 through the through hole 261, improving the gas flow efficiency.

In some embodiments, the height of the first protrusion 242 is 0.1 mm to 4 mm.

Specifically, the height direction of the first protrusion 242 is parallel to the thickness direction of the body 241, and the height of the first protrusion 242 may be 0.1 mm, 0.5 mm, 1 mm, 1.5 mm, 2 mm, 2.5 mm, 3 mmm, 3.5 mm, 4 mm, or the like.

In this way, when the height of the first protrusion 242 is in the above range, a weight of the insulating piece 24 can be reduced while the strength requirement for the first protrusion 242 is satisfied, improving the safety and practicality of the battery cell 20.

Refer to FIG. 6 and FIG. 7. In some embodiments, the first protrusion 242 includes a bottom surface 245 and a side surface 246. The bottom surface 245 abuts against the electrode assembly 22. The side surface 246 connects the first surface 243 and the bottom surface 245. The through hole 261 penetrates the side surface 246.

Specifically, the bottom surface 245 is a surface of the first protrusion 242 facing the electrode assembly 22, in other words, the bottom surface 245 is a surface of the first protrusion 242 away from the first surface 243. The side surface 246 surrounds a periphery of the bottom surface 245, and the side surface 246 is disposed perpendicularly around an edge of the bottom surface 245.

In this way, the through hole 261 penetrates two opposite side surfaces 246 of the first protrusion 242, facilitating the passage of gas through the first protrusion 242, reducing the blockage of gas flow by the first protrusion 242 and improving the smoothness of gas flow.

Refer to FIG. 7. In some embodiments, the through hole 261 penetrates the bottom surface 245.

Specifically, in the thickness direction of the body 241, the through hole 261 may extend from the first surface 243 toward the bottom surface 245. There may be a certain distance between the through hole 261 and the bottom surface 245, or the through hole 261 may penetrate the bottom surface 245.

In this case, the through hole 261 penetrates the bottom surface 245, and this increases the cross-sectional area of the through hole 261, facilitating the rapid gas flow toward the pressure relief mechanism 23 and improving the gas flow efficiency; in addition, formation of the through hole 261 is easier.

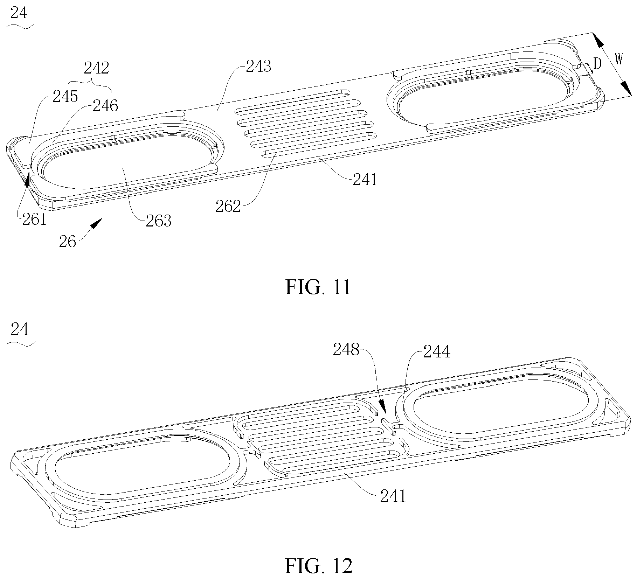

Refer to FIG. 11. In some embodiments, the through hole 261 penetrates the side surface 246 along a length direction of the body 241, a dimension of the through hole 261 along a width direction of the body 241 is D, a width of the body 241 is W, and 0.1 < D/W < 0.9.

Specifically, in the length direction of the body 241, the through hole 261 penetrates two opposite side surfaces 246 of the first protrusion 242, and a ratio of the dimension of the through hole 261 along the width direction of the body 241 to the width dimension of the body 241 may be 0.2, 0.3, 0.4, 0.5, 0.6, 0.7, 0.8, or the like.

In this way, when D/W is in the above range, formation of the through hole 261 is easy. In addition, a larger ratio of the dimension of the through hole 261 along the width direction of the body 241 to the width dimension of the body 241 indicates a larger dimension of the through hole 261 relative to the body 241, facilitating the rapid gas flow toward the pressure relief mechanism 23 and improving the gas flow efficiency.

In some embodiments, D and W may satisfy 0 < D/W < 1.

Refer to FIG. 4 and FIG. 7. In some embodiments, the airflow channel 26 includes a perforation 262 formed at the body 241. The perforation 262 penetrates the first surface 243 and the second surface 244. The perforation 262 is opposite to the pressure relief mechanism 23 along the thickness direction of the body 241. The perforation 262 communicates with the through hole 261.

Specifically, the perforation 262 is a region provided on the first surface 243 and configured to communicate with the through hole 261. Gas can flow from the perforation 262 to the pressure relief mechanism 23. The perforation 262 may be a hollow portion on the insulating piece 24, for example, the perforation 262 may penetrate the body 241 in the thickness direction of the body 241, that is, the perforation 262 may extend from the first surface 243 to the second surface 244. The perforation 262 may be rectangular, square, or the like. Two, three, four, or more perforations 262 may be provided. The quantity and dimension of the perforations 262 and a distance between two adjacent perforations 262 may be set according to actual needs. The perforations 262 are evenly distributed in the center of the body 241, and the pressure relief mechanism 23 is disposed in the center of the first wall 211, so that gas can reach the pressure relief mechanism 23 through the perforation 262, shortening a gas flow distance.

In this way, gas can flow from the first gap 25 to the pressure relief mechanism 23 through the perforation 262, increasing gas flow paths and improving the gas flow efficiency.

Refer to FIG. 4 and FIG. 7. In some embodiments, the airflow channel 26 includes a mounting hole 263 formed at the body 241, the mounting hole 263 penetrates the first surface 243 and the second surface 244, the first protrusion 242 is disposed at an edge of the mounting hole 263, the mounting hole 263 is configured to lead out electrical energy of the battery cell 20.

Specifically, the mounting hole 263 is a region provided on the first surface 243 and configured to communicate with the through hole 261. The mounting hole 263 may be square, circular, elliptical, or the like. The mounting hole 263 may be a hollow portion on the insulating piece 24, for example, the mounting hole 263 may penetrate the body 241 in the thickness direction of the body 241, that is, the mounting hole 263 may extend from the first surface 243 to the second surface 244. Two mounting holes 263 may be provided, and the two mounting holes 263 may be respectively disposed at two ends of the perforation 262 along the length direction of the body 241.

In this way, the electrode assembly 22 can charge and discharge the battery cell 20 through the mounting hole 263, and in addition, gas can also flow to the pressure relief mechanism 23 through the mounting hole 263, increasing gas flow paths and improving the gas flow efficiency.

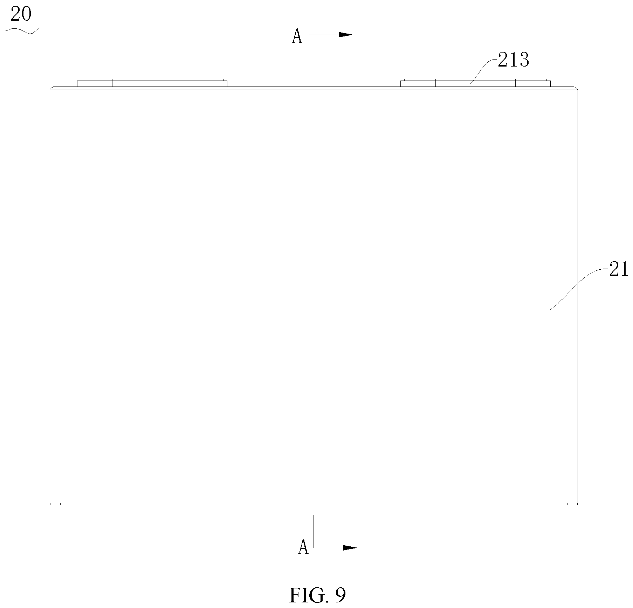

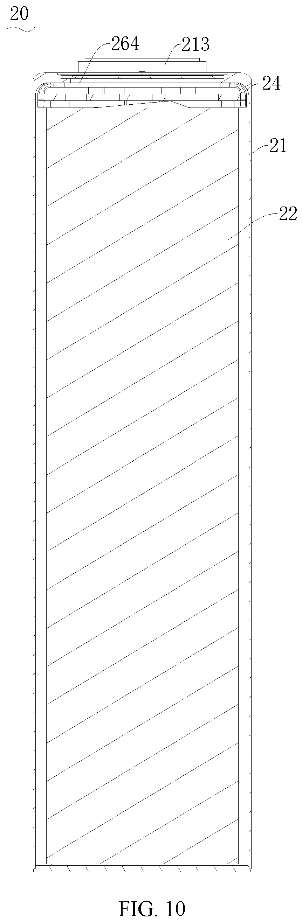

Refer to FIG. 4, FIG. 9 and FIG. 10. FIG. 9 is a front view of a battery cell 20 in some embodiments of this application. FIG. 10 is a cross-sectional view along line A-A in FIG. 9. In some embodiments, a second gap 264 is formed between the second surface 244 and the first wall 211, and the airflow channel 26 includes the second gap 264.

Specifically, a gap between the second surface 244 and the first wall 211 is the second gap 264, and the second gap 264 communicates with the first gap 25 and the pressure relief mechanism 23, so that gas can flow from the first gap 25 to the pressure relief mechanism 23 through the second gap 264.

In this way, the dimension of the second gap 264 is relatively large, and gas can flow to the pressure relief mechanism 23 through the second gap 264, facilitating the rapid gas flow toward the pressure relief mechanism 23 and improving the gas flow efficiency.

Refer to FIG. 4, FIG. 8 and FIG. 10. In some embodiments, the insulating piece 24 includes a plurality of second protrusions 247 disposed on the side surface 246 of the body 241; the plurality of second protrusions 247 are spaced apart along a circumferential direction of the body 241; the second protrusion 247 protrudes from the second surface 244 and abuts against the first wall 211 to form the second gap 264 between the second surface 244 and the first wall 211; a notch 249 is formed between two adjacent second protrusions 247 along the circumferential direction of the body 241; and the notch 249 communicates with the first gap 25 and the second gap 264.

Specifically, two, three, four, five, six, or more second protrusions 247 may be provided, the plurality of second protrusions 247 are symmetrically disposed along the length direction and width direction of the body 241, the second protrusion 247 protrudes from the second surface 244 and abuts against the first wall 211, and the second gap 264 is a gap formed between the second surface 244 and the first wall 211, that is, the second gap 264 is a gap formed between the second surface 244 and the top surface of the second protrusion 247. The notch 249 is a gap formed between two adjacent second protrusions 247, and gas can flow from the first gap 25 to the second gap 264 through the notch 249.

In this way, the plurality of second protrusions 247 can form a plurality of notches 249, and the plurality of notches 249 form a plurality of gas flow positions on the insulating piece 24, facilitating the sequential gas flow from the first gap 25, the notches 249, and the second gap 264 toward the pressure relief mechanism 23 and improving the gas flow efficiency.

Refer to FIG. 4, FIG. 7 and FIG. 8. In some embodiments, the body 241 is formed with a groove 248, the groove 248 is recessed from the second surface 244 toward the first surface 243, and the groove 248 is opposite to the pressure relief mechanism 23 along the thickness direction of the body 241.

Specifically, the groove 248 may be in a regular shape such as circle or square, or an irregular shape, and one or more grooves 248 may be provided. The groove 248 may be disposed at an edge of the mounting hole 263 or at an edge of the perforation 262. The groove 248 may be symmetrically disposed along the length direction and width direction of the body 241.

In this way, since the groove 248 is provided, an area of the second gap 264 can be increased, facilitating the rapid gas flow toward the pressure relief mechanism 23 and improving the gas flow efficiency.

Refer to FIG. 4. In some embodiments, the second protrusion 247 abuts against the second wall 212.

Specifically, the second protrusion 247 protrudes from the edge of the body 241 along the length direction and width direction of the body 241, and a gap between the edge of the body 241 and the second wall 212 forms the notch 249.

In this way, the plurality of second protrusions 247 abut against the second wall 212, and then more positions of the insulating piece 24 contact the second wall 212, improving positioning of the insulating piece 24.

Refer to FIG. 11 and FIG. 12. FIG. 11 is a schematic diagram of a structure of an insulating piece 24 in some embodiments of this application. FIG. 12 is a schematic diagram of a structure of an insulating piece 24 in some embodiments of this application. In some embodiments, an edge of the second surface 244 forms an edge of the insulating piece 24.

Specifically, the edge of the body 241 forms the edge of the insulating piece 24, that is, the length dimension of the body 241 may be the length dimension of the insulating piece 24, and the width dimension of the body 241 may be the width dimension of the insulating piece 24. The dimension of the insulating piece 24 may be smaller than a dimension of an inner surface of the housing 21, and the dimension of the insulating piece 24 may alternatively be equal to a dimension of the inner surface of the housing 21.

In this way, the structure of the insulating piece 24 is simple and the formation is easier.

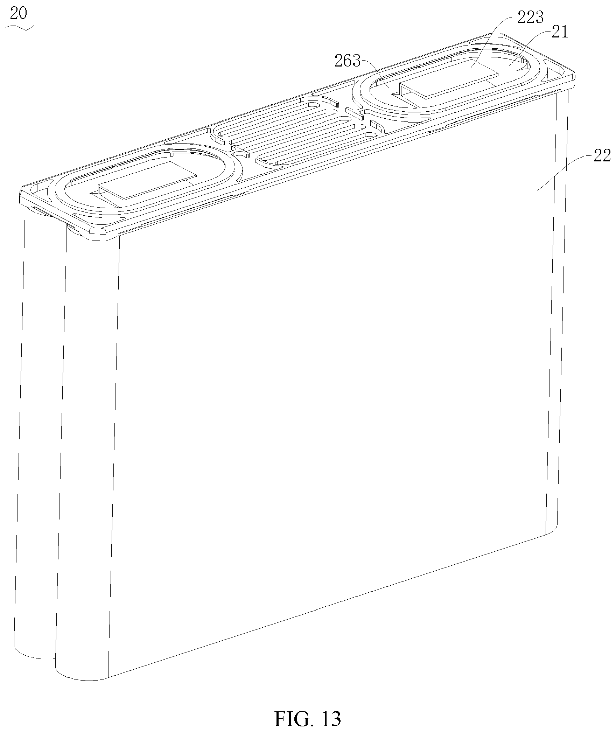

Refer to FIG. 4 and FIG. 13. FIG. 13 is a schematic diagram of a structure of a battery cell 20 in some embodiments of this application. In some embodiments, in a direction perpendicular to the thickness direction of the first wall 211, the dimension of the insulating piece 24 is smaller than a dimension of the inner surface of the housing 21.

Specifically, the length dimension of the body 241 may be smaller than the length dimension of the first wall 211, the width dimension of the body 241 may be smaller than the width dimension of the first wall 211, or the length dimension and width dimension of the body 241 may be respectively smaller than the length dimension and width dimension of the first wall 211.

In this way, a gap can be formed between the edge of the insulating piece 24 and the second wall 212, facilitating the gas flow from the first gap 25 to the second gap 264 through the edge of the insulating piece 24.

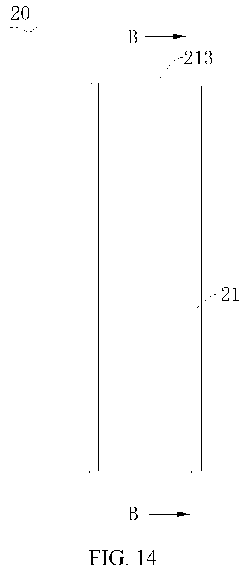

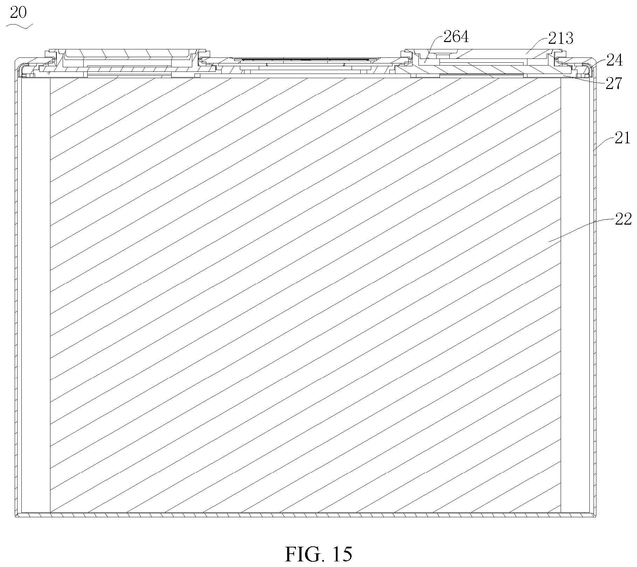

Refer to FIG. 4, FIG. 14 and FIG. 15. FIG. 14 is a side view of a battery cell 20 in some embodiments of this application. FIG. 15 is a cross-sectional view along line B-B in FIG. 14. In some embodiments, the electrode assembly 22 includes a main part 222 and a tab 223 connected to the main part 222, the battery cell 20 includes an electrode terminal 213 disposed on the first wall 211, the electrode terminal 213 is connected to the tab 223, and an insulating layer 27 is provided between the electrode terminal 213 and the main part 222.

Specifically, the main part 222 may be a wound part of the electrode assembly 22, and two tabs 223 may be provided, namely, a positive electrode tab 223 and a negative electrode tab 223, where the positive electrode tab 223 and the negative electrode tab 223 may be located at one end of the main part 222 or respectively at two ends of the main part 222. The electrode terminal 213 may be configured to electrically connect with the electrode assembly 22 for outputting or inputting electrical energy of the battery cell 20. The tab 223 is connected to the electrode terminal 213 of the first wall 211 through the mounting hole 263 to form a current loop. Insulation can be provided by the insulating layer 27 that is formed by spraying an insulating material or pasting a high-temperature resistant insulating material.

In this way, through electrical connection between the electrode terminal 213 and the tab 223, electrical energy of the battery cell 20 can be output or input, to charge and discharge the battery cell 20.

Refer to FIG. 4. In some embodiments, the first wall 211 and the second wall 212 enclose the housing 21 of the battery cell 20 and are integrally formed; the housing 21 includes a third wall 214; the third wall 214 is opposite to the first wall 211; and the third wall 214 is formed as a cover and connected to the second wall 212.

Specifically, the second wall 212 and the third wall 214 are disposed perpendicularly and detachably connected, the shape of the third wall 214 may be adapted to the shape of the second wall 212 to cooperate with the second wall 212, and the third wall 214 may be a circular or square planar structure. Optionally, the third wall 214 may be made of a material with a certain hardness and strength, such as an aluminum alloy, so that the third wall 214 is not prone to deformation when squeezed or impacted, enabling the battery cell 20 to have higher structural strength and also improving safety performance. In some embodiments, the second wall 212 and the third wall 214 enclose the housing 21 of the battery cell 20 and are integrally formed, and the first wall 211 is formed as a cover and detachably connected to the second wall 212.

In this way, the housing 21 enclosed by the first wall 211, the second wall 212, and the third wall 214 forms a closed space for accommodating the electrode assembly 22, isolating the electrode assembly 22 from an external environment and improving the safety of the battery cell 20.

In some embodiments, the wall thickness of the first wall 211 is 0.5 mm to 3 mm.

Specifically, the wall thickness of the first wall 211 refers to the thickness dimension of the first wall 211 in a direction parallel to the second wall 212, and the wall thickness of the first wall 211 may be 0.5 mm, 1 mm, 1.5 mm, 2 mm, 2.5 mm, 3 mm, or the like.

In this case, when the wall thickness of the first wall 211 is in the above range, a weight of the housing 21 can be reduced while the strength requirement for the first wall 211 can be satisfied, improving the safety and practicality of the battery cell 20.

Refer to FIG. 2. The battery 100 in the embodiments of this application includes the battery cell 20.

The battery 100 includes one or more battery cells 20, and the battery 100 may include a battery module or a battery pack.

The electric device in the embodiments of this application includes the battery cell 20 or the battery 100. The battery cell 20 or the battery 100 is configured to provide electrical energy for the electric device.

Finally, it should be noted that the above embodiments are only used to illustrate the technical solutions of this application, and are not intended to limit them; although this application has been described in detail with reference to the foregoing embodiments, those of ordinary skill in the art should understand that the technical solutions recorded in the foregoing embodiments can still be modified, or some or all of the technical features thereof can be equivalently replaced; these modifications or replacements do not make the essence of the corresponding technical solutions depart from the scope of the technical solutions of the embodiments of this application, and they should all be covered within the scope of the claims and specification of this application. In particular, as long as there is no structural conflict, the various technical features mentioned in the various embodiments can be combined in any manner. This application is not limited to the specific embodiments disclosed herein, but includes all technical solutions falling within the scope of the claims.

## Claims

1. A battery cell, **characterized by** comprising:
a housing, comprising a first wall and a second wall connected to the first wall;
an electrode assembly, disposed in the housing, wherein the second wall surrounds the electrode assembly, and a first gap is formed between the electrode assembly and the second wall;
a pressure relief mechanism, disposed on the first wall; and
an insulating piece, disposed between the first wall and the electrode assembly, wherein the insulating piece is configured to form an airflow channel communicating with the first gap, and the airflow channel extends to the pressure relief mechanism.

2. The battery cell according to claim 1, **characterized in that** the airflow channel faces the first gap in a thickness direction of the first wall.

3. The battery cell according to claim 1, **characterized in that** the electrode assembly is wound into a wound structure and forms an arc-shaped surface, and the first gap is formed between the arc-shaped surface and the second wall.

4. The battery cell according to claim 3, **characterized in that** the electrode assembly is provided in plurality, the plurality of electrode assemblies are arranged side by side, and the first gap is jointly formed between two arc-shaped surfaces of adjacent electrode assemblies and the second wall.

5. The battery cell according to any one of claims 1 to 4, **characterized in that** the insulating piece comprises a body and a first protrusion, the body comprises a first surface and a second surface disposed opposite to each other along a thickness direction of the body, the first surface faces the electrode assembly, the first protrusion is disposed on the first surface and abuts against the electrode assembly, and the airflow channel comprises a through hole formed at the first protrusion.

6. The battery cell according to claim 5, **characterized in that** a height of the first protrusion is 0.1 mm to 4 mm.

7. The battery cell according to claim 5, **characterized in that** the first protrusion comprises a bottom surface and a side surface, the bottom surface abuts against the electrode assembly, the side surface connects the first surface and the bottom surface, and the through hole penetrates the side surface.

8. The battery cell according to claim 7, **characterized in that** the through hole penetrates the bottom surface.

9. The battery cell according to claim 7 or 8, **characterized in that** the through hole penetrates the side surface along a length direction of the body, a dimension of the through hole along a width direction of the body is D, a width of the body is W, and 0.1 < D/W < 0.9.

10. The battery cell according to any one of claims 5 to 9, **characterized in that** the airflow channel comprises a perforation formed at the body, the perforation penetrates the first surface and the second surface, the perforation is opposite to the pressure relief mechanism along the thickness direction of the body, and the perforation communicates with the through hole.

11. The battery cell according to claim 10, **characterized in that** the airflow channel comprises a mounting hole formed at the body, the mounting hole penetrates the first surface and the second surface, the first protrusion is disposed at an edge of the mounting hole, and the mounting hole is configured to lead out electrical energy of the battery cell.

12. The battery cell according to any one of claims 5 to 10, **characterized in that** a second gap is formed between the second surface and the first wall, and the airflow channel comprises the second gap.

13. The battery cell according to claim 12, **characterized in that** the insulating piece comprises a plurality of second protrusions disposed on a side surface of the body, the plurality of second protrusions are spaced apart along a circumferential direction of the body, the second protrusion protrudes from the second surface and abuts against the first wall to form the second gap between the second surface and the first wall, a notch is formed between two adjacent second protrusions along the circumferential direction of the body, and the notch communicates with the first gap and the second gap.

14. The battery cell according to claim 12 or 13, **characterized in that** the body is formed with a groove, the groove is recessed from the second surface toward the first surface, and the groove is opposite to the pressure relief mechanism along the thickness direction of the body.

15. The battery cell according to claim 13, **characterized in that** the second protrusion abuts against the second wall.

16. The battery cell according to claim 12, **characterized in that** an edge of the second surface forms an edge of the insulating piece.

17. The battery cell according to claim 16, **characterized in that** in a direction perpendicular to the thickness direction of the first wall, a dimension of the insulating piece is smaller than a dimension of an inner surface of the housing.

18. The battery cell according to any one of claims 1 to 17, **characterized in that** the electrode assembly comprises a main part and a tab connected to the main part, the battery cell comprises an electrode terminal disposed on the first wall, the electrode terminal is connected to the tab, and an insulating layer is provided between the electrode terminal and the main part.

19. The battery cell according to any one of claims 1 to 18, **characterized in that** the first wall and the second wall enclose the housing of the battery cell and are integrally formed; the housing comprises a third wall; the third wall is opposite to the first wall; and the third wall is formed as a cover and connected to the second wall.

20. The battery cell according to claim 19, **characterized in that** a wall thickness of the first wall is 0.5 mm to 3 mm.

21. A battery, **characterized by** comprising the battery cell according to any one of claims 1 to 20.

22. An electric device, **characterized by** comprising the battery cell according to any one of claims 1 to 20 or the battery according to claim 21.
